# EUROPEAN PATENT APPLICATION

(11) **EP 4 148 702 A1**
(43) Date of publication of application: **15.03.2023**
(21) Application number: 22167741.2
(22) Date of filing: 12.04.2022
(51) Int. Cl.: G08G 1/0962, G08G 1/16, G08G 1/0967

(54) **PORTABLE DEVICE FOR VEHICLE-INFORMATION INTEGRATION AND WARNING**

(30) Priority: 13.09.2021 TW 110134110
(71) Applicant: AEON MOTOR Co., Ltd., 743 Tainan City (TW)
(72) Inventor: Lin, Tong-Min, Tainan City (TW)
(74) Representative: Petraz, Gilberto Luigi

(57) **Abstract**

A portable device for vehicle-information integration and warning has a body (21), a ring-type warning light (22), a first communication interface (23), a second communication interface (24), and a processor (25). The ring-type warning light (22) surrounds a display (26) of the body (21). The first communication interface (23) communicates with a dashboard system (11). The second communication interface (24) communicates with an edge computing device (13). The processor (25) receives dashboard data (M) from the dashboard system (11) and drives the display (26) to display a dashboard-information screen (260). When the processor (25) receives a traffic datum (N) from the edge computing device (13), the processor (25) drives the display (26) to display a traffic warning message. Besides, the processor (25) drives the ring-type warning light (22) according to the dashboard data (M) or the traffic datum (N)

## Description

### 1. Field of the Invention

The present application relates generally to a portable device, and more particularly to a portable device for vehicle-information integration and warning.

### 2. Description of Related Art

With the development of technologies, the vehicle technology has various applications for the drivers and the passengers to have better experience. The more important issue is to promote the driving safety. For example, new-style vehicles are equipped with advanced driver assistance systems (ADAS). When the ADAS is working, it provides related warning functions for the driver to focus on driving the vehicle and makes the process of driving much safer. However, the development of technologies is progressive in a step-by-step manner. More advanced and multi-functional ADAS is very expensive. It is to be understood that some old-style vehicles may have lower grade ADAS or even do not have the ADAS. To additionally equip or update the ADAS on the vehicle is expensive, causing burden on the vehicle owners.

On the other hand, there are multimedia-player devices on the market, such as CarPlay or Android Auto devices. However, the multimedia-player device essentially performs a part of functions of the smart phone, such as navigation, entertainment, answering the phone, and so on, for the driver not to use the smart phone when driving.

The conventional multimedia-player device still display figures and texts. When driving, the driver should focus attention on the road conditions and could not divert the attention to review the screen displayed on the conventional multimedia-player device in detail. As a result, the helpfulness for the driving safety by the conventional multimedia-player device is very limited.

An objective of the present invention is to provide a portable device for vehicle-information integration and warning. The warning function is still available although the ADAS is not additionally equipped on the vehicle or not updated. Besides, the present invention may provide the driver with eye-catching warning effect to overcome the problems of the prior art.

The portable device for vehicle-information integration and warning of the present invention is mounted in a vehicle having a dashboard system, and comprises a body, a ring-type warning light, a first communication interface, a second communication interface, and a processor. The body has a display mounted on a surface of the body. The ring-type warning light is mounted on the surface of the body and surrounds the display. The first communication interface is mounted in the body and communicates with the dashboard system of the vehicle. The second communication interface is mounted in the body and communicates with an edge computing device. The processor is mounted in the body and electrically connected to the display, the ring-type warning light, the first communication interface, and the second communication interface. The processor receives dashboard data from the dashboard system via the first communication interface and drives the display to display a dashboard-information screen according to the dashboard data. When the processor receives a traffic datum from the edge computing device via the second communication interface, the processor drives the display to display a traffic warning message according to the traffic datum. The processor drives the ring-type warning light according to the dashboard data or the traffic datum.

Based on the portable device of the present invention, that can be carried around by a user with him/her to a vehicle for installation, and can be used when communicating with the edge computing device and the dashboard system of the vehicle. The ring-type warning light provides the eye-catching warning effect for the driver to observe the warning light from the corner of the driver's eyes and then instantly enhance the attention, so as to properly accelerate, decelerate, or park the vehicle on the roadside. By doing so, the driver may effectively avoid dangerous road conditions or speeding, so as to enhance the driving safety. Besides, the display can display the dashboard-information screen including well-designed images to appear in styles different from a traditional instrument panel. Especially, the contrast of the information displayed on the display could be enhanced. For example, the symbol of the vehicle speed can be enlarged or its color can be changed with the vehicle speed. By doing so, the driver still can clearly know the vehicle speed by glancing over the display rather than gazing at the pointer-type meter or small and monotonous symbols as displayed on the traditional instrument panel. By doing so, the driver can pay more focus on the road conditions. That may be helpful for the driving safety.

### IN THE DRAWINGS

Fig. 1 is a block diagram of an application of the portable device of the present invention.
Fig. 2 is a block diagram of an embodiment of the portable device of the present invention.
Fig. 3 is a schematic diagram of the dashboard-information screen displayed on the display of the portable device of the present invention.
Fig. 4 is a schematic diagram of the dashboard-information screen, the symbol, and the warning window displayed on the display of the portable device of the present invention.
Fig. 5 is a block diagram of another embodiment of the portable device of the present invention.
Fig. 6 is a schematic diagram of the dashboard-information screen and the operating screen displayed on the display of the portable device of the present invention.
Fig. 7 is a schematic diagram of the dashboard-information screen, the warning window, and the operating screen displayed on the display of the portable device of the present invention.
Fig. 8 is a schematic diagram of the first camera and the second camera of the portable device of the present invention respectively mounted on the right rear-view mirror assembly and the right rear-view mirror assembly of the vehicle.
Fig. 9 is a schematic diagram of the right-rear scene of the vehicle displayed on the display of the portable device of the present invention.

The portable device for vehicle-information integration and warning of the present invention can be carried around by a user with him/her to a vehicle for installation. For example, the portable device of the present invention may be installed on a position of a center console at front seats of a car, mounted on a sucker holder and then fixed to an inner side of a front windshield of a car, or mounted on a handle position of a scooter or a motorcycle. The portable device of the present invention may obtain power form the vehicle's battery. For example, the portable device of the present invention may be connected to a power socket via a power cable.

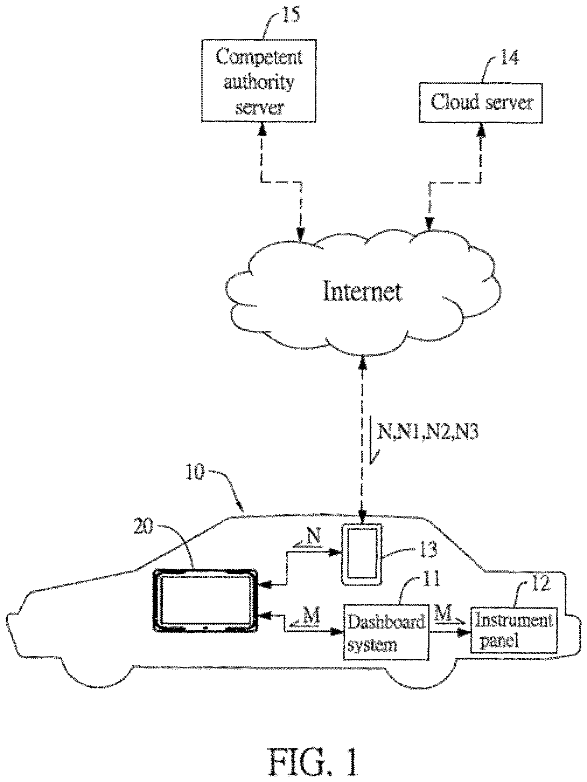

With reference to Fig. 1, in general, the vehicle 10 has a dashboard system 11. The dashboard system 11 collects dashboard data M and displays the dashboard data M on an instrument panel 12 in front of a driver's seat. For example, the dashboard data M collected by the dashboard system 11 may include outdoor temperature, engine speed, vehicle speed, mileage, gear position, fuel consumption, water-tank temperature, and light indicators (such as direction indicators, low beam headlights, and high beam headlights). The dashboard data M may further have data from an advanced driver assistance systems (ADAS) including a blind spot detection system (BSD) and a lane departure warning system (LDW).

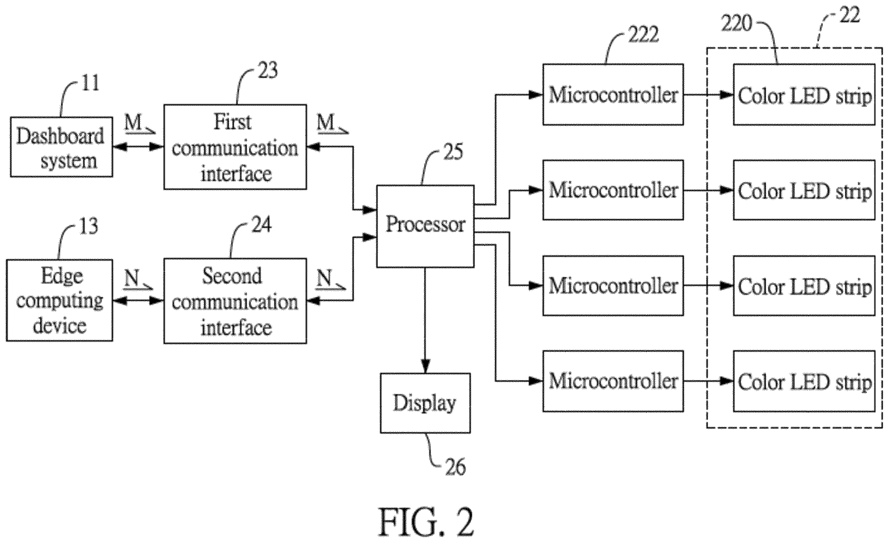

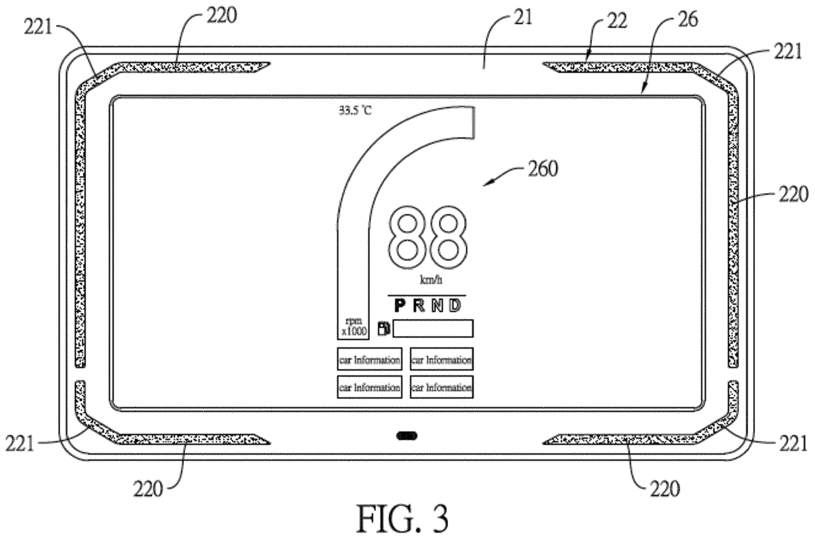

With reference to Figs 2 and 3, the embodiment of the portable device of the present invention comprises a body 21, a ring-type warning light 22, a first communication interface 23, a second communication interface 24, and a processor 25.

The body 21 has a display 26 mounted on a surface of the body 21. A person in the vehicle 10 may watch the screen of the display 26. The ring-type warning light 22 is mounted on the surface of the body 21 and surrounds the display 26. As shown in Fig. 2, there is a gap between the ring-type warning light 22 and the display 26. In other words, the ring-type warning light 22 and the display 26 are mounted on the same surface of the body 21. When the surface of the body 21 on which the ring-type warning light 22 and the display 26 are mounted is defined as a front surface, another surface of the body 21 facing a front of the vehicle 10 is defined as a rear surface. The rear surface of the body 21 may be installed on a position of a center console at front seats of the vehicle 10, or mounted on a sucker holder and then fixed to an inner side of a front windshield of the vehicle 10. The body 21 may be a plastic body shaped in a flat plate structure to be carried on a user's person.

The first communication interface 23 is mounted in the body 21 and communicates with the dashboard system 11 of the vehicle 10. In other words, the communication protocol of the first communication interface 23 matches the communication protocol of the dashboard system 11, such that the first communication interface 23 and the dashboard system 11 may communicate with each other to perform bidirectional data transmission. For example, the first communication interface 23 may work in CAN (control area network) bus protocol, K-line protocol, or on-board diagnostic protocol (such as OBD or OBD-II). When a wired connection is applied between the first communication interface 23 and the dashboard system 11, a first connecter (not shown in the figures) can be mounted on the body 21 and is electrically connected to the first communication interface 23, and the first connecter can be connected to a connector of the dashboard system 11 via a data cable, such that the first communication interface 23 and the dashboard system 11 may communicate with each other.

The second communication interface 24 is mounted in the body 21 and communicates with an edge computing device 13. The edge computing device 13 may be, but is not limited to, a smart phone of a user. An application (APP) may be installed in the edge computing device 13 for the edge computing device to execute the APP. When the edge computing device 13 executes the APP, the edge computing device 13 can establish a communication with the second communication interface 23, such that the second communication interface 24 and the edge computing device 13 may communicate with each other to perform bidirectional data transmission. When a wireless connection is applied between the second communication interface 24 and the edge computing device 13, the second communication interface 24 may be a BLE (Bluetooth Low Energy) interface. Accordingly, the edge computing device 13 can turn on a Bluetooth function, such that the edge computing device 13 and the second communication interface 24 can be paired and communicate with each other.

The edge computing device 13 has a satellite positioning function (such as Global Positioning System, GPS) and a mobile communication function. The edge computing device 13 may derive a positioning coordinate by the satellite positioning function. The edge computing device 13 may communicate with a cloud server 14 by the mobile communication function through the fourth generation (4G), the fifth generation (5G), or a next generation mobile communication technology. The cloud server 14 is a server host with functions including network connection, data transmission, data collection, data processing, and data storage. Hence, the cloud server 14 receives and stores road coordinates of a country or districts and traffic data N corresponding to the road coordinates. The cloud server 14 may also update in real time or periodically update the traffic data N of the road coordinates. The traffic data N may comprise traffic event information, speed limit values, and/or positions of speed cameras. The traffic event information may include traffic jams, traffic accidents, road closure, and so on. The road may be, but is not limited to, freeways, expressways, local ways (such as roads. streets, lanes, and alleys), intersections, tunnels, and so on.

For example, with reference to Fig. 1, the cloud server 14 may communicate with a competent authority server 15 via a network (such as the Internet). Because the staff at the competent authority has established the road coordinates and the traffic data N in the competent authority server 15, and has updated and maintained the road coordinates and the traffic data N, the cloud server 14 may directly download the latest road coordinates and the latest traffic data N from the competent authority server 15. As mentioned above, a format of the traffic data N may include characters or codes recognizable to the edge computing computer 13. For example, the traffic data N may include the characters or the codes (such as "A0") that can be recognized by the edge computing device 13 as a speed camera information N1. Or, the traffic data N may include other characters or the codes (such as "60kph") that can be recognized by the edge computing device 13 as a speed limit value N2. Or, the traffic data N may include other characters or the codes (such as "E0") that can be recognized by the edge computing device 13 as a traffic event information N3.

The processor 25 is mounted in the body 21 and electrically connected to the display 26, the ring-type warning light 22, the first communication interface 23, and the second communication interface 24. In the embodiment of the present invention, the processor 25 may be an integrated circuit (IC) chip and operate a Xerox operating system (XOS). Based on the first communication interface 23, the processor 25 and the dashboard system 11 can perform bidirectional data transmission, so as to receive the dashboard data M from the dashboard system 11 via the first communication interface 23. With reference to Fig. 3, the processor 25 drives the display 26 to display a dashboard-information screen 260 according to the dashboard data M. The dashboard-information screen 260 shows vehicle information including the outdoor temperature, the engine speed, the vehicle speed, the mileage, the gear position, the fuel consumption, the water-tank temperature, and the light indicators. The dashboard-information screen 260 includes well-designed images to appear in styles different from a traditional instrument panel. For example, in the dashboard-information screen 260, the outdoor temperature, the engine speed, the vehicle speed, the mileage, the gear position, the fuel consumption, the water-tank temperature, and the light indicators may be placed on different positions, and their character size, color, or color variation could be preset.

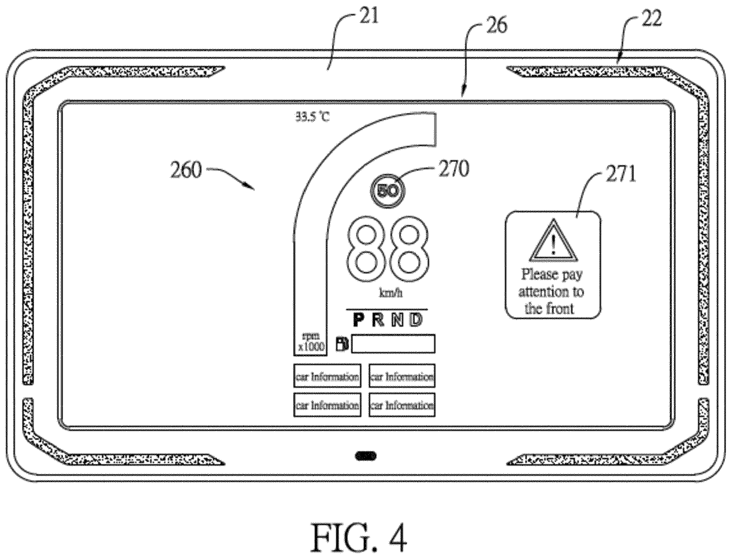

Based on the second communication interface 24, the processor 25 and the edge computing device 13 can perform bidirectional data transmission. When the edge computing device 13 executes the APP, the edge computing device 13 continuously downloads the present traffic data N from the cloud server 14 according to the positioning coordinate of the edge computing device 13. When the edge computing device 13 obtains a present traffic datum N, the traffic datum N is transmitted to the processor 25 via the second communication interface 24. When the processor 25 receives the traffic datum N from the edge computing device 13, the processor 25 drives the display 26 to display a traffic warning message according to the traffic datum N. For example, the traffic datum N may be a speed limit value N2. With reference to Fig. 4, when the traffic datum N is a speed limit value N2, the traffic warning message is provided as a symbol 270 by the processor 25 according to the speed limit value N2. In Fig. 4, the speed limit value N2 is 50 kilometers per hour. When the traffic datum N is a speed camera information N1 or a traffic event information N3, the traffic warning message is provided as a warning window 271 by the processor 25 according to the speed camera information N1 or the traffic event information N3. Symbols and texts recited in the warning window 271 are editable preset contents corresponding to the speed camera information N1 or the traffic event information N3. As shown in Fig. 4, the dashboard-information screen 260 and the traffic warning messages, such as the symbol 270 and the warning window 271, are displayed on the display 26 at the same time. In another embodiment, the warning window 271 may overlap the dashboard-information screen 260. Therefore, when the person on the vehicle 10 watches the display 26, the person not only sees the dashboard-information screen 260, but also the symbol 270 and the warning window 271 to know the present traffic condition.

Besides, the first communication interface 23 and the dashboard system 11 of the vehicle 10 may be disconnected from each other probably, resulting from poor contact of the data cable connected both, or that such data cable may fall off. When the processor 25 still does not receive the dashboard data M from the dashboard system 11 after a predetermined time threshold, the processor 25 determines that the dashboard system 11 is disconnected. If so, the processor 25 may transmit a request command to the edge computing device 13 via the second communication interface 24. According to the request command, the edge computing device 13 computes a speed information, such as a speed value with unit of kph, and transmits the speed information to the processor 25. The edge computing device 13 may compute the speed information based on its positioning coordinate. Using the positioning coordinate to compute the speed information is a common knowledge in the related art. Hence, the processor 25 may receive the speed information from the edge computing device 13 via the second communication interface 24 to display the speed information on the display 26. In other words, the speed information received from the second communication interface 24 is a substitute for showing the speed of the vehicle 10 on the display 26.

The processor 25 drives the ring-type warning light 22 according to the dashboard data M or the traffic datum N. With reference to Fig. 3, the ring-type warning light 22 comprises multiple color LED (light emitting diode) strips 220 separate from each other and surrounding the display 26. In the embodiment of the present invention, the ring-type warning light 22 has four color LED strips 220. In the sight of the person on the vehicle 10, when the person on the vehicle 10 watches the display 26, the four color LED strips 220 are respectively located on the upper-left side, bottom-left side, upper-right side, and bottom-right side of the display 26. Each one of the four color LED strips 220 has a curved part 221 corresponding to the shape of the display 26. As a whole, the color LED strips 220 form a configuration surrounding the display 26. With reference to Fig. 2, each one of the color LED strips 220 is electrically connected to the processor 25 through a microcontroller 222. The microcontroller 222 receives commands transmitted from the processor 25 to activate the color LED strip 220 of the ring-type warning light 22. Hence, the processor 25 may individually control each one of the color LED strips 220 via each one of the microcontrollers 222. For example, the color LED strip 220 comprises multiple RGB-LED components (such as red, green, and blue LED components) connected to each other. The microcontroller 222 may be an IC chip and has 8-bits, 16-bits, or more advanced LED color control function for respectively controlling the color LED strips 220 to flash or change a color.

For example, when the processor 25 drives the display 26 to display the warning window 271, the processor 25 also transmits the commands to the microcontrollers 222 to control the color LED strips 220 to appear in an eye-catching color, such as bright red. By doing so, because the color LED strips 220 surround the display 26, the color LED strips 220 showing the eye-catching color look like an eye-catching light ring. Although the driver focuses on the road condition in front of the vehicle 10, the driver can notice the eye-catching light ring from the corner of the driver's eyes. Hence, the eye-catching light ring induced by the color LED strips 220 can effectively catch the driver's attention to enhance driving safety.

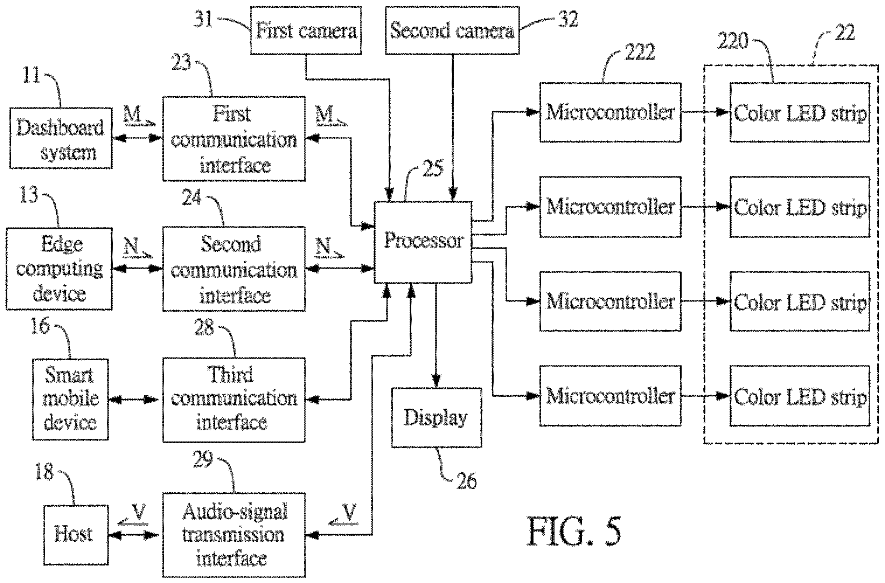

In order to provide various functions to improve the user experience, in one embodiment, with reference to Fig. 5, the portable device of the present invention comprises a third communication interface 28, and the display 26 is a touch display. The third communication interface 28 is mounted in the body 21. The first to the third communication interfaces 23, 24, 28 may be different interfaces that are individually operating. The third communication interface 28 may be a wired communication interface or a wireless communication interface, such as a USB (universal serial bus) interface or a WiFi interface. The third communication interface 28 is adapted to communicate with a smart mobile device 16. The smart mobile device 16 is a smart phone as an example. One smart phone can play roles of the edge computing device 13 and the smart mobile device 16 at the same time. Or, the edge computing device 13 and the smart mobile device 16 may be two different smart phones.

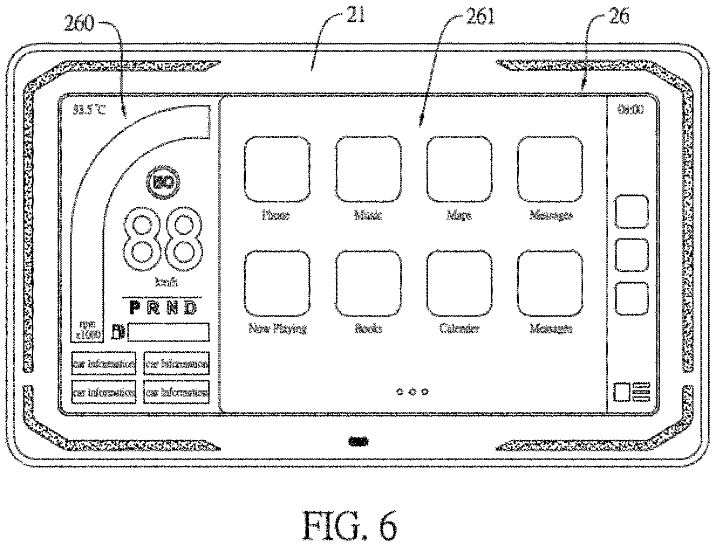

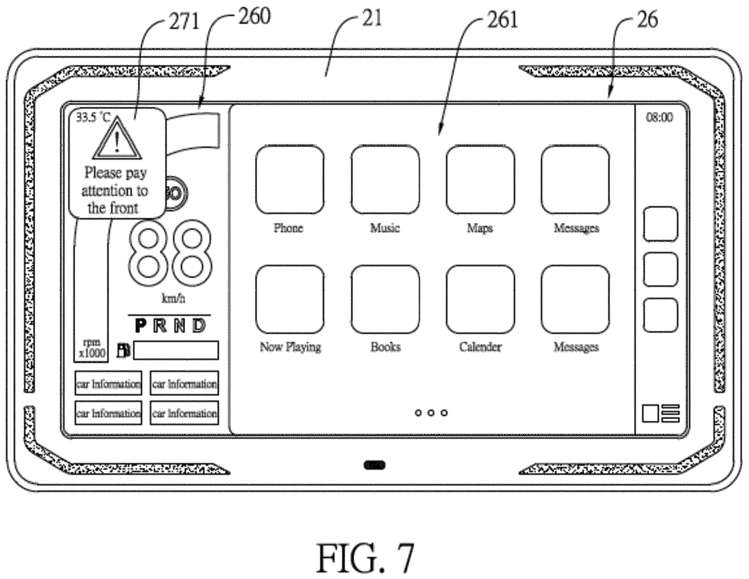

The processor 25 is electrically connected to the third communication interface 28 to communicate with the smart mobile device 16. When the processor 25 and the smart mobile device 16 establish a connection via the third communication interface 28, the processor 25 may recognize the operating system of the smart mobile device 16, and executes an in-vehicle integration software application according to the operating system of the smart mobile device 16. When executing the in-vehicle integration software application, the processor 25 drives the display 26 to display an operating screen 261 as shown in Fig. 6. The dashboard-information screen 260 and the operating screen 261 are displayed side by side on the display 26. The person in the vehicle 10 can watch the dashboard-information screen 260, and also perform a touch control on the operating screen 261. For example, when the operating system of the smart mobile device 16 recognized by the processor 25 is Android, the in-vehicle integration software application executed by the processor 25 is Android Auto. Or, when the operating system of the smart mobile device 16 recognized by the processor 25 is iOS, the in-vehicle integration software application executed by the processor 25 is CarPlay. The approach to recognize the operating system of the edge computing device 16 by the processor 25 is a common knowledge in the related art. For example, executing programming codes, such as "navigator.platform" in JavaScript, can read the type of the operating system of the smart mobile device 16. Although the dashboard-information screen 260 and the operating screen 261 are displayed side by side on the display 26, it would not affect the performance of the warning window 271. As shown in Fig. 7, the warning window 271 may overlap the dashboard-information screen 260.

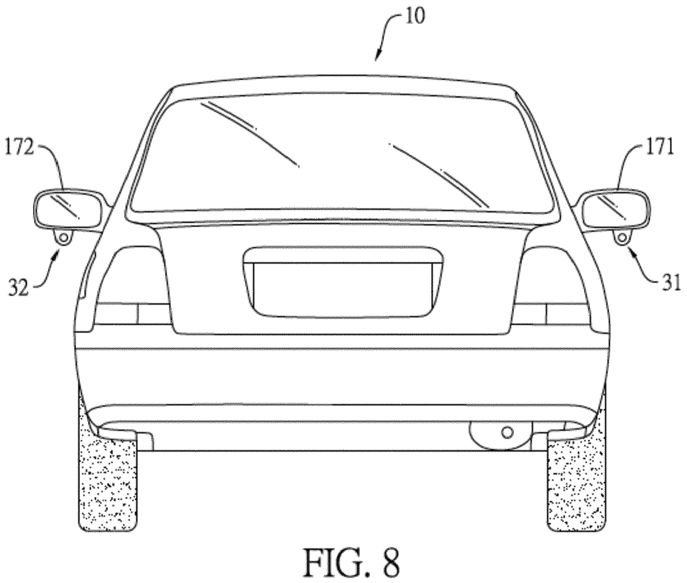

In order to further improve the safety in driving, in one embodiment, with reference to Figs. 5 and 8, the portable device of the present invention comprises a first camera 31 and a second camera 32. The processor 25 is electrically connected to the first camera 31 and the second camera 32. The first camera 31 is mounted on a right side of the vehicle 10 and captures a right-rear scene of the vehicle 10. The second camera 32 is mounted on a left side of the vehicle 10 and captures a left-rear scene of the vehicle 10. For example, with reference to Fig. 8, the first camera 31 is mounted on a right rear-view mirror assembly 171 of the vehicle 10, and the second camera 32 is mounted on a left rear-view mirror assembly 172 of the vehicle 10. The positions of the first camera 31 and the second camera 32 are not limited to the right rear-view mirror assembly 171 and the left rear-view mirror assembly 172. The positions on the vehicle 10 for the first camera 31 and the second camera 32 able to capture the right-rear scene and the left-rear scene of the vehicle 10 are feasible. In general, the first camera 31 and the second camera 32 may be CCD (charge-coupled device) cameras or CMOS (complementary metal-oxide-semiconductor sensor) cameras.

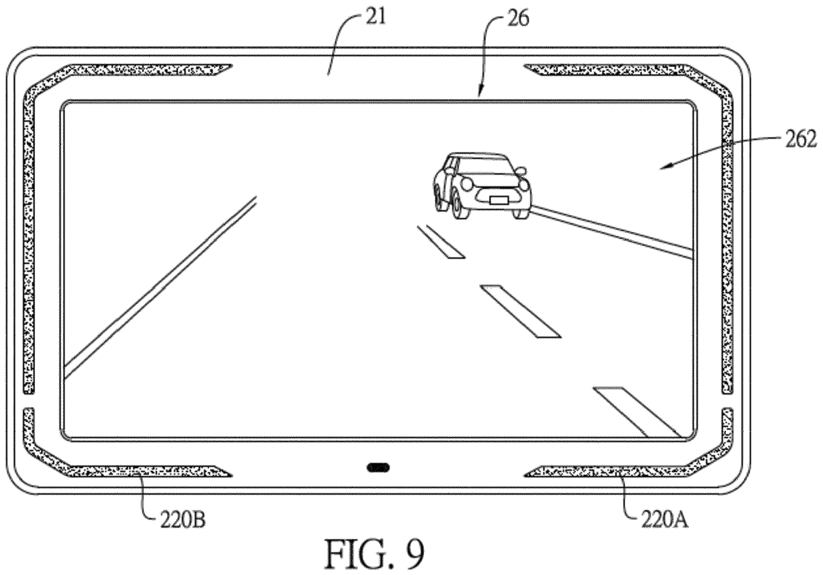

In one embodiment, with reference to Fig. 9, one of the color LED strips 220 mounted on a bottom-right side of the display 26 is defined as a first color LED strip 220A, and another color LED strip mounted on a bottom-left side of the display 26 is defined as a second color LED strip 220B. When the driver of the vehicle 10 switches the turn-signal lever, the instrument panel 12 may display a corresponding indicator light. In other words, the dashboard data M collected by the dashboard system 11 includes a direction indicating signal of right or left. When the processor 25 receives the direction indicating signal of right, the processor 25 may control the display 26 to change its screen, for example, as shown in Fig. 9, to stop displaying the dashboard-information screen 260 and the operating screen 261 and change to display the image (such as the right-rear scene of the vehicle 10) captured by the first camera 31. In addition, the processor 25 controls the first color LED strip 220A to flash or change the color synchronously with the direction indicating signal of right. For the same reason, when the processor 25 receives the direction indicating signal of left, the processor 25 controls the display 26 to display the image (such as the left-rear scene of the vehicle 10) captured by the second camera 32, and controls the second color LED strip 220B to flash or change the color synchronously.

By doing so, the flashing or color changing color LED strips 220 can effectively capture the driver's attention to notice the road scene behind the vehicle 10 displayed on the display 26 for the driver to know whether any car is coming or any pedestrian is there. The position of the first color LED strip 220A and the second color LED strip 220B is a special feature of the present invention. For example, when the driver switches on the direction indicating signal of right, the driver may see the first color LED strip 220A that is flashing or changing the color. Because the first color LED strip 220A is located on the bottom-right side of the display 26, the driver may directly know that the image displayed on the display 26 is the right-rear scene 262 of the vehicle 10. By referring to the right-rear scene 262 on the display 26, the driver may safely complete the action, such as turning or changing the lane. The operation of the second color LED strip 220B could be deduced from the first color LED strip 220A.

In order to promote the audiovisual effect in the vehicle 10, with reference to Fig. 5, the portable device of the present invention comprises an audio-signal transmission interface 29. The audio-signal transmission interface 29 communicates with a host 18 of an audio system of the vehicle 10. In other words, the host 18 also has a transmission interface matching the audio-signal transmission interface 29 of the present invention. Then, the audio-signal transmission interface 29 and the host 18 may communicate with each other and perform bidirectional data transmission. For example, the audio-signal transmission interface 29 may be a Bluetooth transmission interface, FM (frequency modulation) transmitter, or AUX connection interface. The processor 25 is electrically connected to the audio-signal transmission interface 29 to transmit audio signals V to the host 18 via the audio-signal transmission interface 29 to play the audio signals V. The person in the vehicle 10 can listen to the sounds played by the portable device of the present invention. For example, the processor 25 may play a warning sound effect with the displaying of the warning window 271. Or, the sounds of the in-vehicle integration software application could be played, too.

The processor 25 has a wireless update function for a firmware of the processor 25, known as FOTA (Firmware Over-The-Air). For example, the edge computing device 13 can communicate with a firmware update website by its mobile communication function, so as to download a firmware update program from the firmware update website and then transmit the firmware update program to the processor via the second communication interface 24. Hence, the processor 25 can install the firmware update program.

In conclusion, the ring-type warning light 22 can provide the eye-catching warning effect for the driver to observe the warning light from the corner of the driver's eyes and then instantly enhance the attention, so as to implement the driving safety. The display 26 can display the dashboard-information screen 260 to further enhance the contrast of the displayed information. As a result, the driver still can clearly know the vehicle information by glancing over the dashboard-information screen 260 on the display 26 and pay more focus on the road conditions. That may be helpful for the driving safety. Based on the first camera 31 and the second camera 32 and the cooperation with the processor 25 to switch the screen and to drive the ring-type warning light 22 according to the direction indicating signal, the driver can directly know that the image displayed on the display 26 is the right-rear scene 262 of the vehicle 10 without too much consideration. That would be helpful for the driver to focus attention on the driving and the road conditions.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A portable device for vehicle-information integration and warning, **characterized in that** the portable device is configured to be mounted in a vehicle (10) having a dashboard system (11), and comprises:
a body (21) having a display (26) mounted on a surface of the body (21);
a ring-type warning light (22) mounted on the surface of the body (21) and surrounding the display (26);
a first communication interface (23) mounted in the body (21) and communicating with the dashboard system (11) of the vehicle (10);
a second communication interface (24) mounted in the body (21) and communicating with an edge computing device (13); and
a processor (25) mounted in the body (21) and electrically connected to the display (26), the ring-type warning light (22), the first communication interface (23), and the second communication interface (24); the processor (25) receiving dashboard data (M) from the dashboard system (11) via the first communication interface (23) and driving the display (26) to display a dashboard-information screen (260) according to the dashboard data (M);
wherein when the processor (25) receives a traffic datum (N) from the edge computing device (13) via the second communication interface (24), the processor (25) drives the display (26) to display a traffic warning message according to the traffic datum (N);
wherein the processor (25) drives the ring-type warning light (22) according to the dashboard data (M) or the traffic datum (N).

2. The portable device as claimed in claim 1, wherein
the ring-type warning light (22) comprises multiple color light-emitting diode (LED) strips (220) separate from each other and surrounding the display (26); and
each one of the color LED strips (220) is electrically connected to the processor (25) through a microcontroller (222).

3. The portable device as claimed in claim 1, wherein
the display (26) is a touch display;
the portable device comprises a third communication interface (28) mounted in the body (21) and communicating with a smart mobile device (16);
the processor (25) is electrically connected to the third communication interface (28) to communicate with the smart mobile device (16), executes an in-vehicle integration software application according to an operating system of the smart mobile device (16), and drives the touch display to display an operating screen (261) when executing the in-vehicle integration software application; and
the dashboard-information screen (260) and the operating screen (261) are displayed side by side on the touch display.

4. The portable device as claimed in claim 2, wherein
the portable device comprises a first camera (31) and a second camera (32) that are electrically connected to the processor (25);
the first camera (31) is mounted on a right side of the vehicle (10) and captures a right-rear scene of the vehicle (10);
the second camera (32) is mounted on a left side of the vehicle (10) and captures a left-rear scene of the vehicle (10);
the multiple color LED strips (220) include a first color LED strip (220A) mounted on a bottom-right side of the display (26) and a second color LED strip (220B) mounted on a bottom-left side of the display (26);
when the processor (25) receives a direction indicating signal of right, the processor (25) drives the display (26) to display the right-rear scene captured by the first camera (31) and controls the first color LED strip (220A) to flash or change a color; and
when the processor (25) receives another direction indicating signal of left, the processor (25) drives the display (26) to display the left-rear scene captured by the second camera (32) and controls the second color LED strip (220B) to flash or change a color.

5. The portable device as claimed in claim 1, wherein when the traffic datum (N) received by the processor (25) from the edge computing device (13) is a speed limit value (N2), the traffic warning message is provided as a symbol (270) of the speed limit value (N2).

6. The portable device as claimed in claim 1, wherein when the traffic datum (N) received by the processor (25) from the edge computing device (13) is a speed camera information (N1), the traffic warning message is provided as a warning window (271), and the ring-type warning light (22) is controlled by the processor (25) to flash or change a color.

7. The portable device as claimed in claim 1, wherein when the traffic datum (N) received by the processor (25) from the edge computing device (13) is a traffic event information (N3), the traffic warning message is provided as a warning window (271), and the ring-type warning light (22) is controlled by the processor (25) to flash or change a color.

8. The portable device as claimed in claim 1, wherein when the first communication interface (23) is disconnected from the dashboard system (11) of the vehicle (10), the processor (25) receives a speed information from the edge computing device (13) via the second communication interface (24) to display the speed information on the display (26).

9. The portable device as claimed in claim 1, wherein
the portable device comprises an audio-signal transmission interface (29) communicating with a host (18) of an audio system of the vehicle (10); and
the processor (25) is electrically connected to the audio-signal transmission interface (29) to transmit audio signals (V) to the host (18) via the audio-signal transmission interface (29) to play the audio signals (V).

10. The portable device as claimed in claim 1, wherein the processor (25) has a wireless update function for a firmware of the processor (25).
